# EUROPÄISCHE PATENTSCHRIFT

(11) **EP 0 548 514 B1**
(45) Veröffentlichungstag und Bekanntmachung des Hinweises auf die Patenterteilung: **07.05.1997**
(21) Anmeldenummer: 92118920.5
(22) Anmeldetag: 05.11.1992
(51) Int. Cl.: G02B 6/44

(54) **Verbindungsmuffenanordung für Lichtwellenleiter-Phasenseile**
Connection box assembly for light-wave guide phase conductors
Ensemble de jonction pour des conducteurs de phase avec guides d'ondes lumineuses

(30) Priorität: 21.12.1991 DE 4142708
(43) Veröffentlichungstag der Anmeldung: 30.06.1993
(73) Patentinhaber: Felten & Guilleaume Energietechnik AG, D-51058 Köln (DE)
(72) Erfinder: Siegert, Wolfgang, W-5860 Iserlohn 7 (DE); Beck, Manfred, Dipl.-Ing., W-5000 Köln 90 (DE); Kastl, Robert, W-5060 Bergisch Gladbach (DE); Brülls, Johannes, W-5253 Lindlar 7 (DE); Bausch, Joachim, Dr.-Ing., W-5253 Lindlar (DE)

(56) Entgegenhaltungen:
- EP-A- 0 067 614
- EP-A- 0 433 565
- DE-A- 3 835 793
- US-A- 4 958 903
- ETZ, Bd. 108, Nr. 5, 1987, Seiten 170-176; H.G. HAAG: 'Lichtwellenleiterphasenseilluftkabel'

## Beschreibung

Die Erfindung betrifft eine Verbindungsmuffenanordnung für Lichtwellenleiter(-LWL)-Phasenseile nach dem Oberbegriff des Anspruchs 1.

Phasenseile sind im Gegensatz zum Erdseil die energieführenden Seile einer Freileitung. Der Aufbau eines LWL-Phasenseils (eines Phasenseils mit integrierten Lichtwellenleitern) unterscheidet sich praktisch nicht vorn Aufbau eines LWL-Erdseils. So sind beide gemeinsam als LWL-Freileiterseil in der EP-A2-0 286 804 beschrieben.

Bei einem LWL-Phasenseil müssen jedoch an den übergangsstellen von den - in einem Edelstahlröhrchen untergebrachten - Lichtwellenleitern auf ein LWL-Erdkabel zum Abbau des Hochspannungspotential spezielle Endverschlüsse eingesetzt werden, wie sie z. B. in der DE-A1-39 42 245 beschrieben sind.

Eine Verbindungsmuffe für LWL-Phasenseile ist aus dem Aufsatz von H. Haag "Lichtwellenleiter-Phasenseilluftkabel" in der Zeitschrift etz Bd. 108 (1987) S. 170-176 grundsätzlich bekannt. Die dortige "Stromschlaufen-Verbindungsmuffe", die an Abspannmasten eingebaut wird, besteht aus einem Aluminiumbügel, der zum einen die Stromführung übernimmt und zum anderen die eigentliche LWL-Muffe trägt. Als Verbindungsmuffe für die Lichtwellenleiter wird eine Thermoplast-Klemmuffe verwendet, in deren Inneren eine Kassette angeordnet ist, die den Spleiß und einen gewissen Faservorrat aufnimmt. Bei der Konzeption der Muffe wurde der übergang Seil-Muffengebause als besonders anfällig bei Schwingungen angesehen. Deshalb wurde die Armierung direkt hinter der Verbindungsklemme zum Strombügel abgesetzt und die LWL-Seele allein in das Muffengehäuse eingeführt und elastisch abgefangen.

Um die in diesem Fall bei einer Thermoplast-Klemmuffe auftretenden Schwächen zu vermeiden, geht die Erfindung von einer metallischen Muffenanordnung nach der EP 0 067 614 A1 aus.

Diese Verbindungsmuffenanordnung dient neben der Verbindung zweier Phasenseile mit LWL auch der Herausführung von Lichtwellenleitern aus dem Phasenseil auf elektrisches Erdniveau. Die bekannte Anordnung umfaßt neben der Seilbefestigung und der Spleißkammer noch einen Isolator, der am Mast gegen Erde isoliert befestigt werden kann.

Von einer solchen Anordnung ausgehend liegt der Erfindung die Aufgabe zugrunde, eine kompakte Muffenanordnung zur Verbindung zweier LWL-Phasenseile auf Hochspannungsniveau im Freileitungsfeld zu schaffen, die im zugentlasteten Spannfeld im Bereich der Seilüberlappungen eingesetzt werden kann.

Diese Aufgabe wird durch die im Kennzeichen des Anspruchs 1 angegebene Kombination von konstruktiven Merkmalen gelöst. Wesentliche Merkmale bestehen darin, daß jede Seileinführung vom Seilende her wie folgt aufgebaut ist: Seilverschraubung, Einführungshülse und Stirnplatte, jede Gehäusehälfte als Haube ausgebildet ist, die mit ihrem Kopf über die Seileinführung greift und an ihrem Fuß mit der zweiten Gehäusehälfte verschraubt ist, an der Stirnplatte eine Verbindungsstange zur anderen Muffenhälfte angebracht ist und eine der beiden Stangen die LWL-Spleißkassette trägt, die meisten Muffenteile aus Aluminium sind und die Muffe durch eine Stromschiene überbrückt ist, die an jedem Phasenseil mittels einer Schalen-Stromklemme befestigt ist.

Die mit der Erfindung erzielten Vorteile bestehen hauptsächlich darin, daß eine mit geringem Aufwand herstell- und montierbare Verbindungsmuffe für LWL-Phasenseile verfügbar ist, bei der eine bewährte LWL-Verbindungstechnik anwendbar ist.

Vorteilhafte Weiterbildungen der Erfindung sind in den Unteransprüchen angegeben, von denen die Ansprüche 2 die Muffenwerkstoffe, 3 die Seileinführung, 4 die Muffen-Verbindungsstange, 5 die LWL-Einführung, 6 bis 8 die LWL-Spleißkassette und 9 die Stromschiene betreffen.

Ein Ausführungsbeispiel der Erfindung ist in der Zeichnung dargestellt und wird im folgenden näher beschrieben. Es zeigen
- Fig. 1 eine Verbindungsmuffe für LWL-Phasenseile in Seitenansicht mit Teilschnitt,
- Fig. 2 diese Muffe in Stirnansicht, und
- Fig. 3 diese Muffe in Draufsicht mit Teilschnitt.

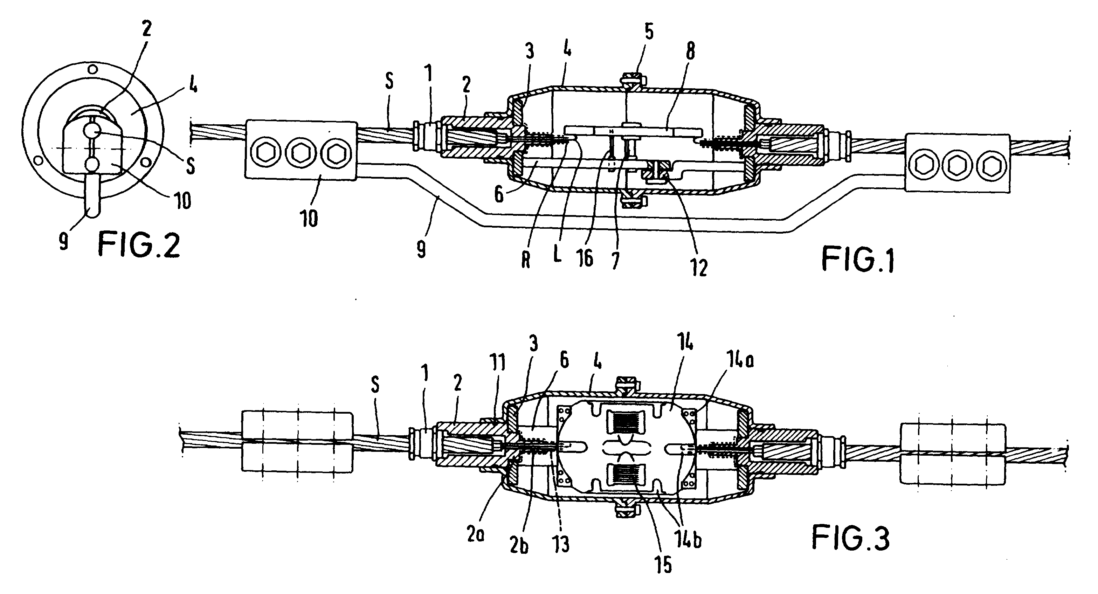

Fig. 1 zeigt eine Verbindungsmuffe für LWL-Phasenseile mit folgendem Grundaufbau: Die Muffe besteht aus zwei, im wesentlichen gleichen, auf die beiden Seilendens aufzubringenden Hälften 4, wobei die Einführung 1,2,3 für jedes Seilendes gleich, mehrteilig und abdichtend, und jede Hälfte des das Gehäuses der Muffe aus Metall, und über das zugehörige Seilende verschiebbar ausgebildet ist.

Weiter zeigt die Figur, daß gemäß der Erfindung jede Seileinführung vom Seilende S her wie folgt aufgebaut ist: Seilverschraubung 1, Einführungshülse 2 und Stirnplatte 3, wobei der Außendurchmesser von Teil zu Teil zunimmt. Jede Gehäusehälfte 4 ist als Haube ausgebildet, die mit ihrem Kopf über die Stirnplatte 3 der Seileinführung und die Einführungshülse 2 - in einer noch stabileren Ausführung auch über die Seilverschraubung 1 - greift, und die an ihrem Fuß einen ringförmigen Ansatz mit Schraubverbindung 5 zur anderen Gehäusehälfte hat. An jeder Stirnplatte 3 ist in der unteren Muffenhälfte die parallel zur Längsachse verlaufende Stange 6 zur Verbindung mit der Stange der anderen Muffenhälfte angebracht, und die linke Stange trägt über den Bolzen 7 die - in der Mitte der Muffe etwas oberhalb ihrer Längsebene angeordnete - LWL-Spleißkassette 8.

Die meisten Muffenteile sind aus Aluminium. So sind Einführungshülse 2, Stirnplatte 3, Gehäuse 4 und Verbindungsstange 6 aus Aluminium. Das LWL-Schutzröhrchen R dagegen ist aus Edelstahl.

Zur Phasenverbindung ist die Muffe durch die Stromschiene 9 aus Aluminium überbrückt, die an jedem Phasenseil S mittels der Schalen-Stromklemme 10 befestigt ist, was zugleich der Stabilität der Muffe dient.

Bei einer weiteren Ausführungsform ist die mechanische Stabilität der Verbindungsmuffe dadurch erhöht, daß die Stromschiene mit dem Muffengehäuse stoffschlüssig verbunden ist. Hier besteht die Stromschiene 9 aus zwei einzelnen Hälften, einer linken und einer rechten Hälfte, und während jedes äußere Ende wie zuvor mittels einer Schalen-Stromklemme 10 an dem zugeordneten Phasenseil S befestigt ist, schließt jedes innere Ende längsseits an die Wand der zugeordneten haubenförmigen Gehäusehälfte 4 an und stößt stirnseitig auf deren ringförmigen Ansatz am Fuß, wo es mit dem Gehäuse verschweißt ist.

Bei der Seileinführung ist die Seilverschraubung 1 mit Elementen zur Seilaufnahme und Zugentlastung, einer Abdichtung und einem Außengewinde gegenüber der Einführungshülse 2 ausgebildet. Die Hülse 2 hat gegenüber dem Kopf der Muffenhaube 4 die Ringdichtung 11. Innnerhalb der Muffe ist die Hülse mit dem Vorsprung 2a und dem Stutzen 2b ausgebildet und auf den Hülsenvorsprung 2a ist die Stirnplatte 3 geschraubt.

Die Muffen-Verbindungsstange 6 ist eine Flachprofilstange, und sie ist am linken Ende an die Einführungs-Stirnplatte 3 gelötet. Am rechten Ende ragt sie über die Muffenmitte hinaus. Dagegen ist die rechte Verbindungsstange kürzer und greift am linken Ende unter die linke Stange, wo beide die Schraubverbindung 12 haben. Auf der linken Stange ist in Muffenmitte der Tragbolzen 7 angebracht, der die Kassette 8 für die LWL-Spleiße und -Überlängen trägt.

Bei einer anderen Ausführungsform besteht die Muffen-Verbindungsstange 6 aus zwei aufeinanderliegenden Flachprofilen verschiedener Länge. Ist beispielsweise bei der längeren linken Stange das obere Flachprofil kürzer als das untere, dann ist es bei der kürzeren rechten Stange umgekehrt, die rechte Stange greift über die linke und beide ergänzen sich zum Vollprofil.

Das LWL-Schutzröhrchen R ist durch den Hülsenvorsprung 2a und den Stutzen 2b in die Muffe eingeführt und dort abgesetzt, von wo aus die Lichtwellenleiter L zur Spleißkassette 8 weitergeführt sind. Hülsenvorsprung, Stutzen und Röhrchenende sind mit dem Schrumpfschlauch 13 überzogen.

Fig. 2 läßt die Umrisse der Muffe in der Stirnansicht erkennen.

Fig. 3 zeigt, daß die Spleißkassette 8 ein flaches, rechteckiges Gehäuse hat, das von der Bodenplatte 14 und ihrem schmalen hochgebogenen Rand gebildet, und mit einem Deckel verschlossen wird. Die Bodenplatte hat an den Ecken die Löcher 14a zum Durchführen der Lichtwellenleiter und auf ihr sind mittig und beidseitig zur Längsachse die beiden kammartigen LWL-Spleißträger 15 angeordnet.

Oben vom Rand der Bodenplatte 14 aus ragen - in der Längsachse und in zwei Querachsen der Platte, die von der Plattenmitte nach rechts und links etwa ein Viertel der Plattenlänge entfernt sind, - je zwei Stege 14b in den Kassettenraum. Unter diesen Stegen sind die LWL-Überlängen gehaltert. Die Bodenplatte samt Rand und Stegen ist aus Kunststoff, der Deckel dagegen ist aus Blech. - Die LWL-Spleißkassette 8 ist mittels der Verschraubung 16 mit der Muffen-Verbindungsstange 6 gegen Verdrehen gesichert.

Diese LWL-Phasenseilmuffe wird hauptsächlich im zugentlasteten Feldbereich eines Abspannmastes montiert (Streckenmuffe). Die beiden Muffenhälften werden auf die abgesetzten Enden der beiden zu verbindenden Seile geschoben und mittels der (Panzergewinde-) Seilverschraubungen fixiert. Dabei sind die beiden Gehäusehälften der Muffe über die Seilenden zurückgeschoben. Die Absatztechnik entspricht derjenigen bei einer LWL-Erdseil-Haubenmuffe. Die LWL-Überlängen werden auf der Bodenplatte der Kassette (Trägerplatte) abgelegt, die LWL-Spleiße in den Spleißträgern. Nach der Beendigung der Spleißarbeiten werden die beiden Gehäusehälften aufgeschoben und miteinander verschraubt. Die Stromschiene zur Verbindung der beiden Phasen ist für den Kurzschlußfall ausgelegt.

## Patentansprüche

1. Verbindungsmuffenanordnung zur elektrischen sowie optischen Verbindung von zwei Lichtwellenleiter-Phasenseilen (S) bestehend aus
- einer Muffe mit einem Gehäuse (4) aus Metall, das aus zwei Teilen besteht, wobei dieses Gehäuse (4) abdichtende Einführungselemente (1,2,3) für jedes Seilende aufweist,
- einer in dem Gehäuse (4) angeordneten Spleißkassette (8), und
- einer Stromschiene (9) aus Aluminum zur Phasenverbindung, die an jedem Phasenseil (S) mit zwei Schalen-Stromklemmen (10) befestigt werden kann,
dadurch gekennzeichnet,
- daß jede Gehäusehälfte als Haube (4) ausgebildet ist, die auf eines der beiden Seilenden aufbringbar ist,
- daß als Einführungselemente für jedes Phasenseilende (S) eine Seilverschraubung (1), eine Einführungshülse (2) und eine Stirnplatte (3) vorhanden sind, wobei die genannten Elemente (1,2,3) jeweils zunehmenden Außendurchmesser haben,
- daß jede Gehäusehälfte mit ihrem Kopfteil über die jeweilige Stirnplatte (3) und die jeweilige Einführungshülse (2) greift und über die jeweilige Einführungshülse (2) und das jeweilige Seilende verschiebbar ausgebildet ist,
- daß jede Stirnplatte (3) an dem jeweiliges Seilende abgewandten Ende der jeweiligen Einführungshülse (2) befestigt ist und ein Loch in der Verlängerung der Einführungshülse (2) aufweist,
- daß das dem jeweiligen Seilende zugewandten Ende jeder Einführungshülse (2) die jeweilige Seilverschraubung (1) trägt,
- daß an jeder Stirnplatte eine parallel zur Längsachse verlaufende Stange (6) angebracht ist und beide Stangen (6) etwa in der Mitte des Gehäuses miteinander befestigbar sind, wobei eine der beiden Stangen über einen Bolzen (7) die LWL-Spleißkassette (8) trägt, und
- daß am Fußteil jeder Gehäusehälfte ein ringförmiger Ansatz mit Schraubverbindung (5) zum ringförmigen Ansatz der anderen Gehäusehälfte vorhanden ist.

2. Verbindungsmuffenanordnung für Lichtwellenleiter-Phasenseile nach Anspruch 1, **dadurch gekennzeichnet,** daß die Muffenteile Einführungshülse (2), Stirnplatte (3), Gehäuse (4) und Verbindungsstange (6) aus Aluminium sind und das LWL-Schultzröhrchen (R) aus Edelstahl ist.

3. Verbindungsmuffenanordnung für Lichtwellenleiter-Phasenseile nach Anspruch 2, **dadurch gekennzeichnet,** daß
- die Seilverschraubung (1) mit Elementen zur Seilaufnahme und Zugentlastung, einer Abdichtung und einem Außengewinde gegenüber der Einführungshülse (2) ausgebildet ist,
- die Hülse (2) gegenüber dem Kopfreil der Muffenhaube (4) eine Ringdichtung (11) hat und die Hülse innnerhalb der Muffe mit einem Vorsprung (2a) und einem Stutzen (2b) ausgebildet ist
- und auf den Hülsenvorsprung (2a) die Stirnplatte (3) geschraubt ist.

4. Verbindungsmuffenanordnung für Lichtwellenleiter-Phasenseile nach Anspruch 2 oder 3, **dadurch gekennzeichnet,**
- daß die Muffen-Verbindungsstangen (6) Flachprofilstangen sind, und sie an einem Ende an die jeweilige Einführungs-Stirnplatte (3) gelötet sind,
- daß die eine Stange (6) über die Muffenmitte hinausgeführt ist, die andere dagegen kürzer ist und am Ende unter die erste greift, wo beide eine Schraubverbindung (12) haben
- und daß auf der längeren Stange in Muffenmitte der Tragbolzen (7) angebracht ist, der die Kassette (8) für die LWL-Spleiße und
- Überlängen trägt.

5. Verbindungsmuffenanordnung für Lichtwellenleiter-Phasenseile nach Anspruch 3 oder 4, **dadurch gekennzeichnet,**
- daß das LWL-Schutzröhrchen (R) durch den Hülsenvorsprung (2a) und den Stutzen (2b) in die Muffe eingeführt und dort abgesetzt ist, von wo aus die Lichtwellenleiter (L) zur Spleißkassette (8) weitergeführt sind,
- und daß Hülsenvorsprung, Stutzen und Röhrchenende mit einem Schrumpfschlauch (13) überzogen sind.

6. Verbindungsmuffenanordnung für Lichtwellenleiter-Phasenseile nach Anspruch 5, **dadurch gekennzeichnet,**
- daß die Spleißkassette (8) ein flaches, rechtcckiges Gehäuse hat, das von einer Bodenplatte (14) mit einem schmalen hochgebogenen Rand gebildet, und mit einem Deckel verschlossen wird,
- daß die Bodenplatte an den Ecken Löcher (14a) zum Durchführen der Lichtwellenleiter hat
- und daß auf der Bodenplatte mittig und beidseitig zur Längsachse je ein kammartiger LWL-Spleißträger (15) angeordnet ist.

7. Verbindungsmuffenanordnung für Lichtwellenleiter-Phasenseile nach Anspruch 6, **dadurch gekennzeichnet,**
- daß oben vom Rand der Bodenplatte (14) aus - in der Längsachse und in zwei Querachsen der Platte, die von der Plattenmitte nach rechts und links etwa ein Viertel der Plattenlänge entfernt sind, - je zwei Stege (14b) in den Kassettenraum ragen, unter denen die LWL-überlängen gehaltert sind
- und daß die Bodenplatte samt Rand und Stegen aus Kunststoff ist und der Deckel aus Blech ist.

8. Verbindungsmuffenanordnung für Lichtwellenleiter-Phasenseile nach Anspruch 7, **dadurch gekennzeichnet,** daß die LWL-Spleißkassette (8) mittels einer Seilverschraubung (16) mit der Muffen-Verbindungsstange (2) gegen Verdrehen gesichert ist.

9. Verbindungsmuffenanordnung für Lichtwellenleiter-Phasenseile nach einem der vorhergehenden Ansprüche, **dadurch gekennzeichnet,** daß die der Phasenverbindung dienende Stromschiene (9) aus zwei einzelnen Hälften - einer linken und einer rechten Hälfte - besteht, und jedes äußere Ende an dem zugeordneten Phasenseil (S) befestigt ist und jedes innere Ende längsseite an die Wand der zugeordneten haubenförmigen Gehäusehälfte (4) anschließt und stirnseitig auf deren ringförmigen Ansatz stößt, wo es mit dem Gehäuse verschweißt ist.

## Claims

1. A connection box assembly for the electrical and optical connection of two light waveguide phase conductors (S) comprising
- a joint with a housing (4) made of metal, consisting of two parts, whereby this housing (4) has sealing inlet elements (1,2,3) for each conductor end;
- a splice case (8) arranged in the housing (4)
- and a conductor bar (9) made of aluminium for phase connection, which can be secured to each phase conductor (S) with two clamp terminals (10);
characterized in that
- each housing half has the form of a hood (4) which can be fitted to one of the two conductor ends;
- a conductor gland (1), an inlet bush (2) and a header plate (3) are provided as inlet elements for each phase conductor end (S), whereby these elements (1,2,3) exhibit an increasing outer diameter;
- each housing half with its header section engages via the relevant header plate (3) and relevant inlet bush (2) and can be shifted via the relevant inlet bush (2) and relevant conductor end;
- the header plate (3) is secured to the end of the relevant inlet bush (2) facing away from the relevant conductor end and has a hole in the extension of the inlet bush (2);
- the end of each inlet bush (2) facing the relevant conductor end supports the relevant conductor gland (1);
- a bar (6), parallel to the longitudinal axis, is fitted to each header plate, and both bars (6) can be secured to each other approximately in the middle of the housing, whereby one of the two bars supports the light waveguide splice case (8) via a pin (7);
- and a circular shoulder with screwed connection (5) to the circular shoulder of the other housing half is provided at the base section of each housing half.

2. A connection box assembly for light waveguide phase conductors according to Claim 1, characterized in that the joint elements comprising inlet bush (2), header plate (3), housing (4) and connecting bar (6) are made of aluminium, and the light waveguide protective tube (R) is made of high-grade steel.

3. A connection box assembly for light waveguide phase conductors according to Claim 2, characterized in that
- the conductor gland (1) has elements to accept the conductor and for strain relief, a seal and outer thread with respect to the inlet bush (2);
- the bush (2) has an O-ring seal (11) with respect to the header section of the joint hood (4), and the bush has a projection (2a) and an inner gland (2b) within the connection box;
- and the header plate (3) is screwed onto the bush projection (2a).

4. A connection box assembly for light waveguide phase conductors according to Claim 2 or 3, characterized in that
- the box connecting bars (6) have a flat cross-section and are soldered onto one end of the relevant inlet header plate (3);
- one bar (6) is routed through the middle of the connection box, whilst the other one is shorter and its end engages with the first one from below, whereby both have a screwed connection (12);
- the supporting pin (7) is fitted to the longer bar at the middle of the connection box, to support the case (8) for the light waveguide splices and overlengths.

5. A connection box assembly for light waveguide phase conductors according to Claim 3 or 4, characterized in that
- the light waveguide protective tube (R) is inserted through the bush projection (2a) and inner gland (2b) into the connection box and is cut back there, at which point the light waveguides (L) are routed to the splice case (8);
- and the bush projection, inner gland and tube end are covered with a shrink-on sleeve (13).

6. A connection box assembly for light waveguide phase conductors according to Claim 5, characterized in that
- the splice case (8) has a flat, rectangular housing formed by a baseplate (14) with a narrow bent-up edge and is closed with a cover;
- the baseplate has holes (14a) at the corners for entry of the light waveguides;
- and a comb-type light waveguide splice mount (15) is arranged in the middle and on each side of the longitudinal axis.

7. A connection box assembly for light waveguide phase conductors according to Claim 6, characterized in that
- above, from the edge of the baseplate (14) - in the longitudinal axis and in two transverse axes of the plate at a distance of about one quarter of the plate length to the right and left of the plate centre - two bridge areas (14b) protrude into the case space, under which the light waveguide overlengths are secured
- and the baseplate with edge and web areas is made of plastic and the cover is made of sheet metal.

8. A connection box assembly for light waveguide phase conductors according to Claim 7, characterized in that the light waveguide splice case (8) is prevented from rotating by means of a screw fitting (16) on the box connecting bar (6).

9. A connection box assembly for light waveguide phase conductors according to one of the above claims, characterized in that the conductor bar (9) connecting the phases consists of two halves, a left half and a right half, and each outer end is secured to its allocated phase conductor (S) and each inner end is longitudinally joined to the wall of its allocated hood-shaped housing half (4) and abuts the circular shoulder at the front, where it is welded to the housing.

## Revendications

1. Ensemble de jonction pour la jonction électrique et optique de deux conducteurs de phase avec guides d'ondes lumineuses (S) composé
- d'une boîte de jonction avec un carter métallique (4), constitué de deux parties, ce carter (4) présentant des éléments d'introduction étanches (1,2,3) pour chaque extrémité des conducteurs,
- d'une cassette d'épissure (8) placée à l'intérieur du carter (4), et
- d'une barre conductrice (9) en aluminium pour la jonction des phases, pouvant être fixée sur chacun des conducteurs de phase (S) à l'aide de deux bornes d'alimentation en coquilles (10),
caractérisé en ce
- que chaque moitié du carter a la forme d'une calotte (4) montable sur l'une des deux extrémités des conducteurs (S)
- que, comme éléments d'introduction pour chaque extrémité des conducteurs (S), il existe un vissage du conducteur (1), une douille d'introduction (2) et une plaque frontale (3), le diamètre extérieur de chacun des éléments cités (1,2,3) allant s'accroissant,
- que chacune des moitiés du carter s'engage par son sommet par l'intermédiaire de la plaque frontale respective (3) et la douille d'introduction respective (2) et est réalisée de manière à être déplaçable par l'intermédiaire de la douille d'introduction respective (2) et l'extrémité respective du conducteur,
- que chacune des plaques frontales (3) est fixée à l'extrémité de la douille d'introduction (2) respective se trouvant à l'opposé de l'extrémité respective du conducteur et présente un trou dans le prolongement de la douille d'introduction,
- que l'extrémité de chacune des douilles d'introduction (2) tournées vers l'extrémité respective du conducteur porte le vissage du conducteur respectif,
- qu'une tige (6) parallèle à l'axe longitudinal est fixée sur chacune des plaques frontales et que les deux tiges (6) peuvent être fixées l'une à l'autre à peu près au milieu du carter, l'une des deux tiges portant alors, par l'intermédiaire d'un boulon (7), la cassette d'épissure des guides d'ondes lumineuses (8), et
- qu'à la base de chacune des moitiés du carter se trouve une patte annulaire, laquelle est assemblée par vissage (5) à la patte annulaire de l'autre moitié du carter.

2. Ensemble de jonction pour des conducteurs de phase avec guides d'ondes lumineuses selon la revendication 1, caractérisé en ce que les parties de la boîte de jonction douille d'introduction (2), plaque frontale (3), carter (4) et tige de raccordement (6) sont en aluminium et que le tube de protection des guides d'ondes lumineuses (R) est en acier spécial.

3. Ensemble de jonction pour des conducteurs de phase avec guides d'ondes lumineuses selon la revendication 2, caractérisé en ce que
- le vissage du conducteur (1) comporte des éléments de réception du conducteur et de décharge de traction, un joint d'étanchéité et un filetage externe vis-à-vis de la douille d'introduction (2),
- la douille (2) a, vis-à-vis du sommet de la calotte de la boîte de jonction (4), un joint annulaire (11) et la douille, à l'intérieur de la boîte de jonction, comporte une saillie (2a) et une tubulure (2b),
- la plaque frontale (3) est vissée sur la saillie de la douille (2a).

4. Ensemble de jonction pour des conducteurs de phase avec guides d'ondes lumineuses selon la revendication 2 ou 3, caractérisé en ce
- que les tiges de raccordement de la boîte de jonction (6) sont des tiges plates et sont, à une extrémité, soudées à la plaque frontale d'introduction respective (3),
- que l'une des tiges (6) dépasse le milieu de la boîte de jonction, l'autre, au contraire, est plus courte et s'engage sous la première où les deux tiges sont reliées par vissage (12),
- que sur la tige la plus longue, au milieu de la boîte de jonction, se trouve fixé le boulon-support (7) qui porte la cassette (8) pour l'épissure des guides d'ondes lumineuses et les surlongueurs.

5. Ensemble de jonction pour des conducteurs de phase avec guides d'ondes lumineuses selon la revendication 3 ou 4, caractérisé en ce
- que le tube de protection (R) des guides d'ondes lumineuses est introduit par la saillie de la douille (2a) et la tubulure (2b) à l'intérieur de la boîte de jonction où il est déposé et d'où les guides d'ondes lumineuses (L) sont transmises à la cassette d'épissure (8)
- et que la saillie de la douille, la tubulure et l'extrémité du tube sont recouverts d'une gaine rétrécissable.

6. Ensemble de jonction pour des conducteurs de phase avec guides d'ondes lumineuses selon la revendication 5, caractérisé en ce
- la cassette d'épissure (8) a un boîtier plat, rectangulaire, constitué d'une plaque de fond (14) munie d'un bord étroit, recourbé vers le haut et fermé par un couvercle,
- que la plaque de fond a des trous (14a) dans les coins pour laisser passer les guides d'ondes lumineuses
- et qu'au milieu de la plaque de fond et de chaque côté de l'axe longitudinal se trouve respectivement un support d'épissure (15) de guides d'ondes lumineuses en forme de peigne.

7. Ensemble de jonction pour des conducteurs de phase avec guides d'ondes lumineuses selon la revendication 6, caractérisé en ce
- qu'en haut, à partir du bord de la plaque de fond (14) - selon l'axe longitudinal et selon deux axes transversaux de la plaque, qui sont, à droite et à gauche, éloignés du milieu de la plaque et d'environ un quart de la longueur de la plaque - respectivement deux moulures (14 b) dépassent dans l'espace de la cassette, sous lesquelles les surlongueurs des guides d'ondes lumineuses sont maintenues,
- et que la plaque de fond, y compris le bord et les moulures sont en matière plastique et que le couvercle est en tôle.

8. Ensemble de jonction pour des conducteurs de phase avec guides d'ondes lumineuses selon la revendication 7, caractérisé en ce que la cassette d'épissure (8) des guides d'ondes lumineuses est bloquée en rotation au moyen d'un vissage (16) à la tige de raccordement (6) de la boîte de jonction.

9. Ensemble de jonction pour des conducteurs de phase avec guides d'ondes lumineuses selon l'une des revendications précédentes, caractérisé en ce que la barre conductrice (9) servant à la jonction des phases est constituée de deux moitiés - une moitié gauche et une moitié droite - et que chaque extrémité externe est fixée au conducteur de phase respectif et chaque extrémité interne se raccorde, du côté longitudinal, à la paroi de la moitié du carter (4) en forme de calotte associée, en étant adjacente, du côté frontal, à la patte annulaire de celle-ci, où elle est soudée au carter.
